# EUROPEAN PATENT APPLICATION

(11) **EP 4 836 277 A1**
(43) Date of publication of application: **04.11.2026**
(21) Application number: 24909624.9
(22) Date of filing: 27.06.2024
(51) Int. Cl.: H02M 7/219

(54) **CONTROL METHOD AND APPARATUS FOR CURRENT-SOURCE-TYPE CONVERTER, AND CIRCUIT, DEVICE AND MEDIUM**

(30) Priority: 29.12.2023 CN 202311871523
(71) Applicant: Midea Group Co., Ltd., Foshan, Guangdong 528311 (CN)
(72) Inventor: TAO, Yong, Foshan, Guangdong 528311 (CN); GUO, Shuai, Foshan, Guangdong 528311 (CN)
(74) Representative: Ran, Handong
(86) International application number: PCT/CN2024/101996
(87) International publication number: WO 2025/138664

(57) **Abstract**

The present application belongs to the technical field of converters. Provided are a control method and apparatus for a current-source-type converter, and a circuit, a device and a medium. The method comprises: on the basis of the current voltages of three phases in a three-phase alternating current, determining the maximum phase, the minimum phase and the intermediate phase; on the basis of the current voltage of the maximum phase, determining a first duty cycle corresponding to the maximum phase; on the basis of the current voltage of the intermediate phase, determining a second duty cycle corresponding to the intermediate phase; on the basis of the second duty cycle corresponding to the intermediate phase, determining a third duty cycle corresponding to the minimum phase, wherein the minimum phase and the intermediate phase complement each other; and on the basis of the current voltages of the three phases, the first duty cycle, the second duty cycle and the third duty cycle, controlling a plurality of controllable switch devices in a current-source-type converter to connect or disconnect. By using the present application, the voltage stress is reduced, and the EMI performance is improved.

## Description

The present disclosure claims priority to Chinese Patent Application No. 202311871523.9, filed on December 29, 2023, entitled "Control Method and Apparatus for Current-Source-Type Converter, and Circuit, Device and Medium", the entire contents of which are incorporated herein by reference.

### TECHNICAL FIELD

The present disclosure relates to the field of converter technology, and in particular to a control method, an apparatus, a circuit, a device, and a medium for a current-source-type converter.

### BACKGROUND

Three-phase alternating current can be subjected to AC-DC conversion through a current-source-type converter to form a DC bus, supplying power to some load devices.

Usually, the duty ratio corresponding to the maximum phase is calculated based on the voltage of the maximum phase, the duty ratio corresponding to the minimum phase is calculated based on the voltage of the minimum phase, and the middle phase is complementary to the minimum phase.

However, in each switching cycle of the above control process, the bridge arm DC output voltage will jump directly from zero to the line voltage between the middle phase and the maximum phase, and also jump directly from the line voltage between the middle phase and the maximum phase to zero. The magnitude of the jump is relatively large, which may easily cause resonance between the inductor and the capacitor, thereby resulting in large voltage stress and poor EMI performance.

### SUMMARY OF THE DISCLOSURE

Embodiments of the present disclosure provide a control method for a current-source-type converter, which may reduce the magnitude of each jump of the bridge arm DC output voltage, thereby reducing voltage stress and improving EMI performance. The technical solution is as follows.

In a first aspect, a control method for a current-source-type converter is provided, the method including:
determining a maximum phase, a minimum phase, and a middle phase based on current voltages of the three phases in the three-phase alternating current;
determining a first duty ratio corresponding to the maximum phase based on the current voltage of the maximum phase;
determining a second duty ratio corresponding to the middle phase based on the current voltage of the middle phase;
determining a third duty ratio corresponding to the minimum phase based on the second duty ratio corresponding to the middle phase; wherein the minimum phase is complementary to the middle phase; and
controlling a plurality of controllable switching devices in the current-source-type converter to be turned on or off based on the first duty ratio, the second duty ratio, and the third duty ratio.

In some embodiments, the controlling the plurality of controllable switching devices in the current-source-type converter to be turned on or off based on the first duty ratio, the second duty ratio, and the third duty ratio includes:
in any switching cycle, in a case where the controllable switching device corresponding to the middle phase is in an off state, controlling the controllable switching device on an upper bridge arm corresponding to the minimum phase or the controllable switching device on a lower bridge arm corresponding to the minimum phase to be in an on state; in a case where the controllable switching device corresponding to the middle phase is in an on state, controlling both the controllable switching device on the upper bridge arm corresponding to the minimum phase and the controllable switching device on the lower bridge arm corresponding to the minimum phase to be in an off state.

In some embodiments, the controlling the plurality of controllable switching devices in the current-source-type converter to be turned on or off based on the first duty ratio, the second duty ratio, and the third duty ratio includes:
in any switching cycle, in a case where both the controllable switching device corresponding to the maximum phase and the controllable switching device corresponding to the middle phase are in an off state, controlling both the controllable switching device on an upper bridge arm corresponding to the minimum phase and the controllable switching device on a lower bridge arm corresponding to the minimum phase to be in an on state; in a case where the controllable switching device corresponding to the maximum phase is in an on state and the controllable switching device corresponding to the middle phase is in an off state, controlling the controllable switching device on the upper bridge arm corresponding to the minimum phase or the controllable switching device on the lower bridge arm corresponding to the minimum phase to be in an on state.

In some embodiments, the controlling the plurality of controllable switching devices in the current-source-type converter to be turned on or off based on the first duty ratio, the second duty ratio, and the third duty ratio includes:
in any switching cycle, controlling both the controllable switching device on an upper bridge arm corresponding to the maximum phase and the controllable switching device on a lower bridge arm corresponding to the maximum phase to be turned on or turned off based on the first duty ratio;
controlling both the controllable switching device on an upper bridge arm corresponding to the middle phase and the controllable switching device on a lower bridge arm corresponding to the middle phase to be turned on or turned off based on the second duty ratio; and
controlling both the controllable switching device on an upper bridge arm corresponding to the minimum phase and the controllable switching device on a lower bridge arm corresponding to the minimum phase to be turned on or turned off based on the third duty ratio.

In some embodiments, the determining the first duty ratio corresponding to the maximum phase based on the current voltage of the maximum phase includes:
determining the first duty ratio corresponding to the maximum phase based on a sum of squares of the current voltages of the three phases, the current voltage of the maximum phase, and a DC voltage.

In some embodiments, the determining the second duty ratio corresponding to the middle phase based on the current voltage of the middle phase includes:
determining the second duty ratio corresponding to the middle phase based on a sum of squares of the current voltages of the three phases, the current voltage of the middle phase, and a DC voltage.

In some embodiments, the controllable switching device is any one of an IGBT (Insulated Gate Bipolar Transistor), a MOSFET (Metal Oxide Semiconductor Field Effect Transistor), and a combination of an IGBT and a diode connected in anti-parallel.

In a second aspect, a control apparatus for a current-source-type converter is provided, the apparatus including:
a first determination module, configured to determine a maximum phase, a minimum phase and a middle phase based on the current voltages of the three phases in the three-phase alternating current;
a second determination module, configured to determine a first duty ratio corresponding to the maximum phase based on the current voltage of the maximum phase;
a third determination module, configured to determine a second duty ratio corresponding to the middle phase based on the current voltage of the middle phase;
a fourth determination module, configured to determine a third duty ratio corresponding to the minimum phase based on the second duty ratio corresponding to the middle phase, wherein the minimum phase is complementary to the middle phase; and
a control module, configured to control a plurality of controllable switching devices in the current-source-type converter to be turned on or off based on the current voltages of the three phases, the first duty ratio, the second duty ratio and the third duty ratio.

In some embodiments, the control module is configured to:
in any switching cycle, in a case where the controllable switching device corresponding to the middle phase is in an off state, control the controllable switching device on an upper bridge arm corresponding to the minimum phase or the controllable switching device on a lower bridge arm corresponding to the minimum phase to be in an on state; in a case where the controllable switching device corresponding to the middle phase is in an on state, control both the controllable switching device on the upper bridge arm corresponding to the minimum phase and the controllable switching device on the lower bridge arm corresponding to the minimum phase to be in an off state.

In some embodiments, the control module is further configured to:
in any switching cycle, in a case where both the controllable switching device corresponding to the maximum phase and the controllable switching device corresponding to the middle phase are in an off state, control both the controllable switching device on an upper bridge arm corresponding to the minimum phase and the controllable switching device on a lower bridge arm corresponding to the minimum phase to be in an on state; in a case where the controllable switching device corresponding to the maximum phase is in an on state and the controllable switching device corresponding to the middle phase is in an off state, control the controllable switching device on the upper bridge arm corresponding to the minimum phase or the controllable switching device on the lower bridge arm corresponding to the minimum phase to be in an on state.

In some embodiments, the control module is configured to:
in any switching cycle, control both the controllable switching device on an upper bridge arm corresponding to the maximum phase and the controllable switching device on a lower bridge arm corresponding to the maximum phase to be turned on or turned off based on the first duty ratio;
control both the controllable switching device on an upper bridge arm corresponding to the middle phase and the controllable switching device on a lower bridge arm corresponding to the middle phase to be turned on or turned off based on the second duty ratio; and
control both the controllable switching device on an upper bridge arm corresponding to the minimum phase and the controllable switching device on a lower bridge arm corresponding to the minimum phase to be turned on or turned off based on the third duty ratio.

In some embodiments, the second determination module is configured to:
determine the first duty ratio corresponding to the maximum phase based on a sum of squares of the current voltages of the three phases, the current voltage of the maximum phase, and a DC voltage.

In some embodiments, the third determination module is configured to:
determine the second duty ratio corresponding to the middle phase based on a sum of squares of the current voltages of the three phases, the current voltage of the middle phase, and a DC voltage. In some embodiments, the controllable switching device is any one of an IGBT, a MOSFET, and a combination of an IGBT and a diode connected in anti-parallel.

In a third aspect, a control circuit for a current-source-type converter is provided, the control circuit including a current-source-type converter and a controller;
the controller is configured to:
determine a maximum phase, a minimum phase, and a middle phase based on current voltages of the three phases in the three-phase alternating current;
determine a first duty ratio corresponding to the maximum phase based on the current voltage of the maximum phase;
determine a second duty ratio corresponding to the middle phase based on the current voltage of the middle phase;
determine a third duty ratio corresponding to the minimum phase based on the second duty ratio corresponding to the middle phase, wherein the minimum phase is complementary to the middle phase; and
   control the plurality of controllable switching devices in the current-source-type converter to be turned on or off based on the current voltages of the three phases, the first duty ratio, the second duty ratio, and the third duty ratio. In some embodiments, the controller is configured to:
in any switching cycle, in a case where the controllable switching device corresponding to the middle phase is in an off state, control the controllable switching device on an upper bridge arm corresponding to the minimum phase or the controllable switching device on a lower bridge arm corresponding to the minimum phase to be in an on state; in a case where the controllable switching device corresponding to the middle phase is in an on state, control both the controllable switching device on the upper bridge arm corresponding to the minimum phase and the controllable switching device on the lower bridge arm corresponding to the minimum phase to be in an off state.

In some embodiments, the controller is configured to:
in any switching cycle, in a case where both the controllable switching device corresponding to the maximum phase and the controllable switching device corresponding to the middle phase are in an off state, control both the controllable switching device on an upper bridge arm corresponding to the minimum phase and the controllable switching device on a lower bridge arm corresponding to the minimum phase to be in an on state; in a case where the controllable switching device corresponding to the maximum phase is in an on state and the controllable switching device corresponding to the middle phase is in an off state, control the controllable switching device on the upper bridge arm corresponding to the minimum phase or the controllable switching device on the lower bridge arm corresponding to the minimum phase to be in an on state.

In some embodiments, the controller is configured to:
in any switching cycle, control both the controllable switching device on an upper bridge arm corresponding to the maximum phase and the controllable switching device on a lower bridge arm corresponding to the maximum phase to be turned on or turned off based on the first duty ratio;
control both the controllable switching device on an upper bridge arm corresponding to the middle phase and the controllable switching device on a lower bridge arm corresponding to the middle phase to be turned on or turned off based on the second duty ratio; and
control both the controllable switching device on an upper bridge arm corresponding to the minimum phase and the controllable switching device on a lower bridge arm corresponding to the minimum phase to be turned on or turned off based on the third duty ratio.

In some embodiments, the controller is configured to:
determine the first duty ratio corresponding to the maximum phase based on a sum of squares of the current voltages of the three phases, the current voltage of the maximum phase, and a DC voltage.

In some embodiments, the controller is configured to:
determine the second duty ratio corresponding to the middle phase based on a sum of squares of the current voltages of the three phases, the current voltage of the middle phase, and a DC voltage. In some embodiments, the controllable switching device is any one of an IGBT, a MOSFET, and a combination of an IGBT and a diode connected in anti-parallel.

In a fourth aspect, a computer device is provided, the computer device including a processor and a memory, the memory storing at least one instruction, the instruction being loaded and executed by the processor to perform the operations performed by the control method for a current-source-type converter.

In a fifth aspect, a computer-readable storage medium is provided, the storage medium storing at least one instruction, the instruction being loaded and executed by a processor to perform the operations performed by the control method for a current-source-type converter.

In a sixth aspect, a computer program product is provided, the computer program product including at least one instruction, the at least one instruction being loaded and executed by a processor to perform the operations performed by the control method for a current-source-type converter.

The beneficial effects brought by the technical solution provided by the embodiments of the present disclosure are: In the solutions mentioned in the embodiments of the present disclosure, the first duty ratio corresponding to the maximum phase is determined based on the current voltage of the maximum phase, the second duty ratio corresponding to the middle phase is determined based on the current voltage of the middle phase, and the minimum phase is complementary to the middle phase. Thus, in each switching cycle, the bridge arm DC output voltage will jump from zero to the line voltage between the minimum phase and the maximum phase, then from the line voltage between the minimum phase and the maximum phase to the line voltage between the middle phase and the maximum phase, then from the line voltage between the middle phase and the maximum phase to the line voltage between the minimum phase and the maximum phase, and then from the line voltage between the minimum phase and the maximum phase to zero.

Since in any sector among the 12 sectors, the line voltage between the minimum phase and the maximum phase is smaller than the line voltage between the middle phase and the maximum phase, adopting the present disclosure reduces the jump amplitude of the bridge arm DC output voltage, thereby reducing voltage stress and improving EMI performance.

### BRIEF DESCRIPTION OF THE DRAWINGS

In order to explain the technical solutions in the embodiments of the present disclosure more clearly, the drawings required for describing the embodiments will be briefly introduced below. Obviously, the drawings in the following description are only some embodiments of the present disclosure. For those skilled in the art, other drawings may be obtained based on these drawings without creative effort.
FIG. 1 is a topological diagram of a current-source-type converter according to some embodiments of the present disclosure.
FIG. 2 is a flowchart of a control method for a current-source-type converter according to some embodiments of the present disclosure.
FIG. 3 is a waveform diagram of a three-phase alternating current according to some embodiments of the present disclosure.
FIG. 4 is a driving timing diagram of a current-source-type converter in the related art.
FIG. 5 is a schematic diagram of changes in bridge arm DC output voltage in the related art.
FIG. 6 is a driving timing diagram of a current-source-type converter according to some embodiments of the present disclosure.
FIG. 7 is a schematic diagram of changes in bridge arm DC output voltage according to some embodiments of the present disclosure.
FIG. 8 is a structural schematic diagram of a control apparatus for a current-source-type converter according to some embodiments of the present disclosure.
FIG. 9 is a structural block diagram of a terminal according to some embodiments of the present disclosure.
FIG. 10 is a structural block diagram of a server according to some embodiments of the present disclosure.

### DETAILED DESCRIPTION

To make the objectives, technical solutions and advantages of the present disclosure clearer, the implementations of the present disclosure will be further described in detail below with reference to the accompanying drawings.

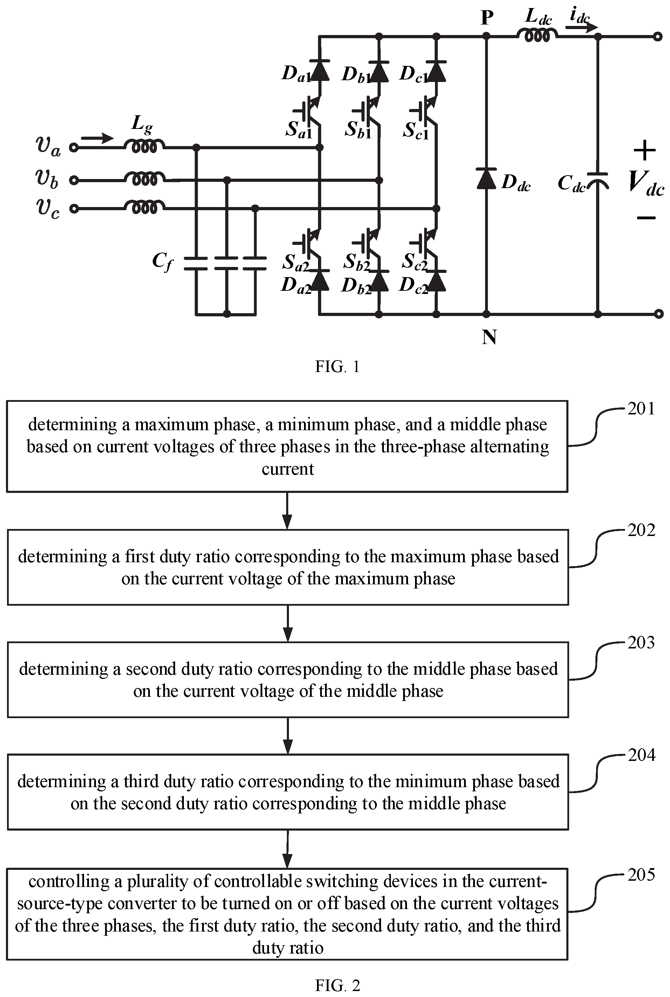

Referring to FIG. 1, FIG. 1 is a topological schematic diagram of a current-source-type converter, where *vₐ, v_{b}, v_{c}* are the current voltages of the three phases in the three-phase alternating current, *V_{dc}* is the DC voltage, and *V_{PN}* is the bridge arm DC output voltage. The current-source-type converter can convert three-phase alternating current (AC) into direct current (DC), thereby forming a DC bus.

FIG. 2 is a flowchart of a control method for a current-source-type converter according to some embodiments of the present disclosure. Referring to FIG. 2, the method includes operations at blocks illustrated herein.

At block 201: determining a maximum phase, a minimum phase, and a middle phase based on current voltages of three phases in the three-phase alternating current.

In implementation, the current voltages of the three phases in the three-phase alternating current, i.e., *vₐ, v_{b}* and *v_{c}* in FIG. 1, may be detected periodically, and the maximum phase, the minimum phase, and the middle phase may be judged according to the absolute values of the current voltages of the three phases.

Among the current voltages of the three phases, the one with the greatest absolute value of the current voltage is the maximum phase, the one with the least absolute value of the current voltage is the minimum phase, and the one with the middle absolute value of the current voltage is the middle phase.

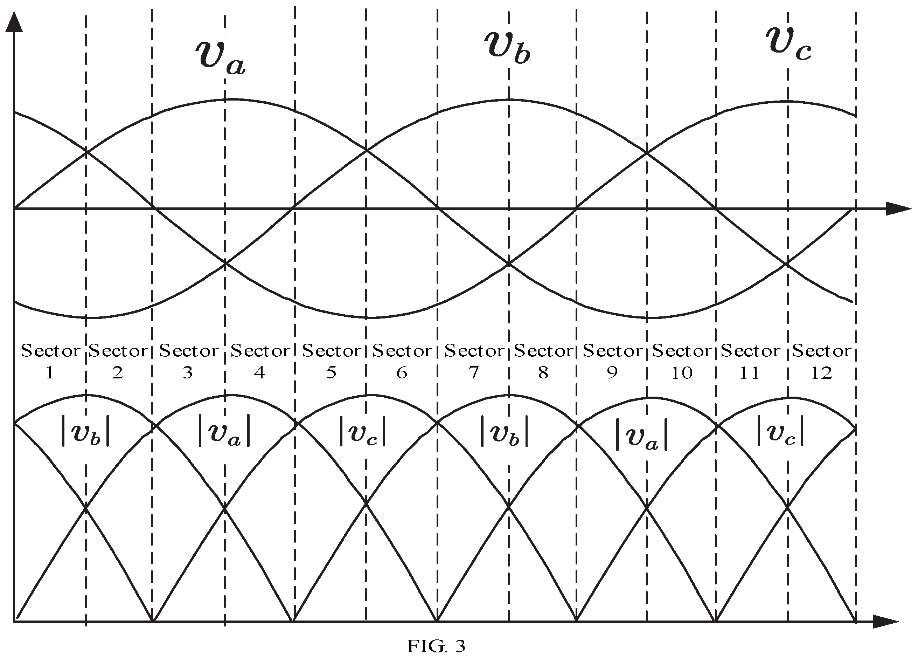

Referring to FIG. 3, in some embodiments of the present disclosure, the period of the three-phase alternating current is divided into 12 sectors, i.e., sector 1, sector 2, sector 3, sector 4, sector 5, sector 6, sector 7, sector 8, sector 9, sector 10, sector 11, and sector 12 in FIG. 3.

In sector 1, *v_{c}* > *vₐ* > 0 > *v_{b},* |*v_{b}*| > |*v_{c}*| > |*vₐ*|, then the maximum phase is *v_{b}*, the middle phase is *v_{c},* and the minimum phase is *vₐ.*

In sector 2, *vₐ > v_{c}* > 0 > *v_{b},* |*v_{b}*| > |*vₐ*| > |*v_{c}*|, then the maximum phase is *v_{b},* the middle phase is *vₐ,* and the minimum phase is *v_{c}.*

In sector 3, *vₐ* > 0 > *v_{c}* > *v_{b},* |*vₐ*| > |*v_{b}*| > |*v_{c}*|, then the maximum phase is *vₐ,* the middle phase is *v_{b},* and the minimum phase is *v_{c}.*

In sector 4, *vₐ* > 0 > *v_{b}* > v_{c}*,* |*vₐ*| > |*v_{c}*| > |*v_{b}*|*,* then the maximum phase is *vₐ,* the middle phase is *v_{c}*, and the minimum phase is *v_{b},*

In sector 5, *vₐ* > *v_{b}* > 0 > *v_{c}*, |*v_{c}*| > |*vₐ*| > |*v_{b}*|, then the maximum phase is *v_{c}*, the middle phase is *vₐ,* and the minimum phase is *v_{b}.*

In sector 6, *v₃ > vₐ >* 0 *> v_{c}*, |*v_{c}*| > |*v_{b}*| > |*vₐ*|*,* then the maximum phase is *v_{c}*, the middle phase is *v_{b},* and the minimum phase is *vₐ.*

In sector 7, *v_{b}* > 0 *> vₐ > v_{c}*, |*v_{b}*| > |*v_{c}*| > |*vₐ*|*,* then the maximum phase is *v_{b},* the middle phase is *v_{c}*, and the minimum phase is *vₐ.*

In sector 8, *v_{b} >* 0 > *v_{c} > vₐ,* |*v_{b}*| > |*v*ₐ| *>* |*v_{c}*|, then the maximum phase is *v_{b},* the middle phase is *vₐ,* and the minimum phase is *v_{c}.*

In sector 9, *v_{b} > v_{c} >* 0 *> v,,* |*v*ₐ| > |*v_{b}*| > |*v_{c}*|, then the maximum phase is *vₐ,* the middle phase is *v_{b},* and the minimum phase is *v_{c}.*

In sector 10, *v_{c}* > *v_{b} >* 0 *> vₐ,* |*vₐ*| *>* |*v_{c}*| > |*v_{b}*|*,* then the maximum phase is *vₐ,* the middle phase is *v_{c}*, and the minimum phase is *v_{b}.*

In sector 11, *v_{c} > 0 > v_{b} > vₐ,* |*v_{c}*| > |*vₐ*| > |*v_{b}*|*,* then the maximum phase is *v_{c},* the middle phase is *vₐ,* and the minimum phase is *v_{b}.*

In sector 12, *v_{c} >* 0 *> vₐ* > *v_{b},* |*v_{c}*| > |*v_{b}*| > |*v_{b}*|*,* then the maximum phase is *v_{c}*, the middle phase is *v_{b},* and the minimum phase is *vₐ.*

The characteristic of these 12 sectors is: in any sector, the current voltage of the maximum phase is opposite in polarity to the current voltage of the minimum phase, and the current voltage of the maximum phase is also opposite in polarity to the current voltage of the middle phase.

At block 202: determining a first duty ratio corresponding to the maximum phase based on the current voltage of the maximum phase.

In implementation, after the maximum phase is determined, based on the current voltage of the maximum phase, the first duty ratio corresponding to the maximum phase is calculated. The first duty ratio refers to a ratio of a duration during which a part of controllable switching devices corresponding to the maximum phase are turned on to a total duration of the switching cycle. The part of the controllable switching devices corresponding to the maximum phase are the controllable switching device(s) on an upper bridge arm corresponding to the maximum phase or the controllable switching device(s) on a lower bridge arm corresponding to the maximum phase.

Since the first duty ratio is calculated based on the current voltage of the maximum phase, the maximum phase may be turned on at the middle time of the switching cycle, and the conduction duration of the maximum phase is the duration corresponding to the first duty ratio (i.e., the product of the first duty ratio and the total duration of the switching cycle).

The above-mentioned turning on the maximum phase at the middle time of the switching cycle can also be understood as that in each switching cycle in the driving timing diagram, the driving signal of the maximum phase is symmetrically arranged with respect to the middle moment of the switching cycle.

At block 203: determining a second duty ratio corresponding to the middle phase based on the current voltage of the middle phase.

In implementation, after the middle phase is determined, based on the current voltage of the middle phase, the second duty ratio corresponding to the middle phase is calculated. The second duty ratio refers to a ratio of a duration during which a part of controllable switching devices corresponding to the middle phase are turned on to the total duration of the switching cycle. The part of the controllable switching devices corresponding to the middle phase are the controllable switching device(s) on the upper bridge arm corresponding to the middle phase or the controllable switching device(s) on the lower bridge arm corresponding to the middle phase.

Since the second duty ratio is calculated based on the current voltage of the middle phase, the middle phase may be turned on at the middle time of the switching cycle, and the conduction duration of the middle phase is the duration corresponding to the second duty ratio (i.e., the product of the second duty ratio and the total duration of the switching cycle).

The above-mentioned turning on the middle phase at the middle time of the switching cycle can also be understood as that in each switching cycle in the driving timing diagram, the driving signal of the middle phase is symmetrically arranged with respect to the middle moment of the switching cycle.

At block 204: determining a third duty ratio corresponding to the minimum phase based on the second duty ratio corresponding to the middle phase.

The minimum phase is complementary to the middle phase.

In implementation, after the second duty ratio corresponding to the middle phase is determined, based on the principle that the minimum phase is complementary to the middle phase, the third duty ratio corresponding to the minimum phase is (1 - second duty ratio).

The minimum phase may be turned on at the initial time and the final time of the switching cycle, and the conduction duration of the minimum phase is the duration corresponding to the third duty ratio (i.e., the product of the third duty ratio and the total duration of the switching cycle), or to say, the conduction duration of the minimum phase is the difference between the total duration of the switching cycle and the duration corresponding to the second duty ratio.

The above-mentioned turning on the minimum phase at the initial time and the final time of the switching cycle can also be understood as that in each switching cycle in the driving timing diagram, the driving signal of the minimum phase is symmetrically located at both ends of the switching cycle, and the sum of the conduction durations of the minimum phase at both ends is the duration corresponding to the third duty ratio.

At block 205: controlling a plurality of controllable switching devices in the current-source-type converter to be turned on or off based on the current voltages of the three phases, the first duty ratio, the second duty ratio, and the third duty ratio.

In implementation, after the first duty ratio, the second duty ratio, and the third duty ratio are determined, the plurality of controllable switching devices in the current-source-type converter may be controlled to be turned on or off based on the current voltages of the three phases, the first duty ratio, the second duty ratio and the third duty ratio.

In some embodiments, the controllable switching device may be any one of an IGBT, a MOSFET, and a combination of an IGBT and a diode connected in anti-parallel, or may be other reasonable switching devices, which is not specifically limited in the embodiments of the present disclosure.

Below, the beneficial effects of the control method for the current-source-type converter provided by the present disclosure are described in detail.

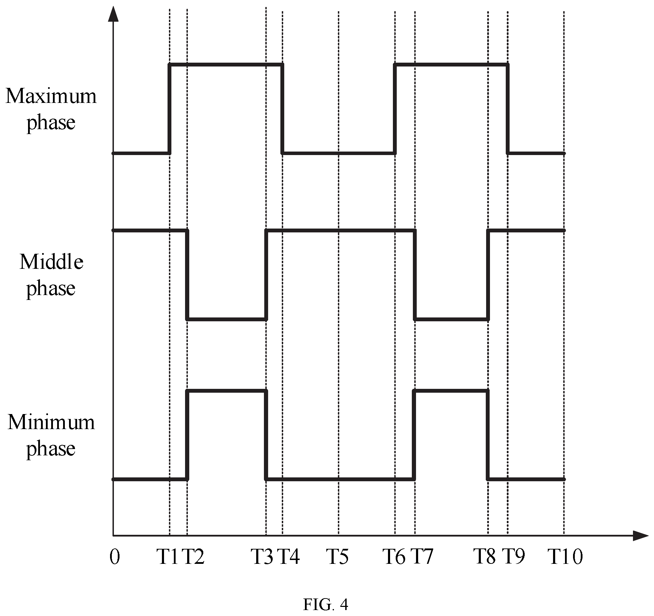

In the related art, usually the duty ratio of the maximum phase and the duty ratio of the minimum phase are calculated first, and then the middle phase is complementary to the minimum phase. Then, when the current-source-type converter is working, the maximum phase and the minimum phase are turned on at the middle time of a switching cycle, and the middle phase is turned on at the initial time and the final time of a switching cycle. Referring to FIG. 4, at the beginning (time 0) of a switching cycle (0-T5 or T5-T10 in FIG. 4), the middle phase is in an on state, at time T1 the maximum phase is turned on, at time T2 the middle phase is turned off and the minimum phase is turned on, at time T3 the minimum phase is turned off and the middle phase is turned on, at time T4 the maximum phase is turned off, and from time T4 to time T5 the middle phase is always in an on state until entering the next switching cycle, repeating the above process. The duration corresponding to the duty ratio of the maximum phase is T1-T4, the duration corresponding to the duty ratio of the minimum phase is T2-T3, and the duration corresponding to the duty ratio of the middle phase is the sum of the durations 0-T2 and T3-T5 (also equal to twice the duration 0-T2, also equal to twice the duration T3-T5).

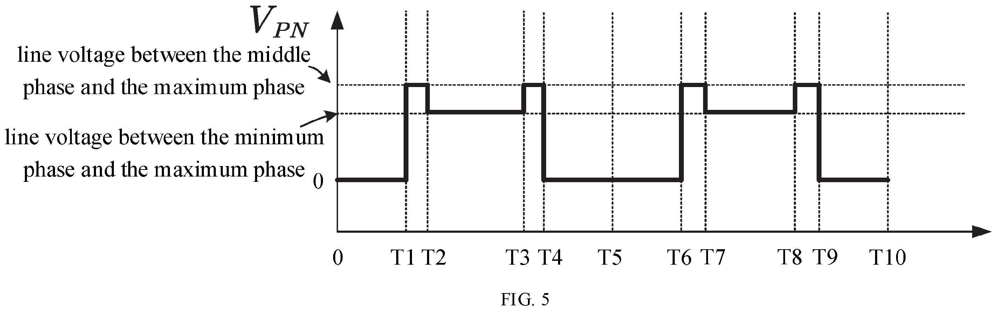

In the above control process, referring to FIG. 5, during the process 0-T1, since only the middle phase is turned on, a loop cannot be formed in the bridge arm, therefore the bridge arm DC output voltage *V_{PN}* is 0; at time T1, the maximum phase is turned on, a loop is formed between the maximum phase and the middle phase, therefore at this time the bridge arm DC output voltage *V_{PN}* jumps from 0 to "the line voltage between the middle phase and the maximum phase"; at time T2, the middle phase is turned off and the minimum phase is turned on, a loop is formed between the maximum phase and the minimum phase, therefore at this time the bridge arm DC output voltage *V_{PN}* jumps from "the line voltage between the middle phase and the maximum phase" to "the line voltage between the minimum phase and the maximum phase"; at time T3, the minimum phase is turned off and the middle phase is turned on, a loop is formed between the maximum phase and the middle phase, therefore at this time the bridge arm DC output voltage *V_{PN}* jumps from "the line voltage between the minimum phase and the maximum phase" to "the line voltage between the middle phase and the maximum phase"; at time T4, the maximum phase is turned off, only the middle phase is turned on, a loop cannot be formed in the bridge arm, therefore at this time the bridge arm DC output voltage *V_{PN}* jumps from "the line voltage between the middle phase and the maximum phase" to zero.

Since in the same sector, the current voltage of the maximum phase is opposite in polarity to the current voltage of the minimum phase, and the current voltage of the maximum phase is also opposite in polarity to the current voltage of the minimum phase, the line voltage formed between the middle phase and the maximum phase will be greater than the line voltage between the minimum phase and the maximum phase. Therefore, in the related art, in each switching cycle, the bridge arm DC output voltage *V_{PN}* undergoes a relatively large amplitude jump between zero and "the line voltage formed between the middle phase and the maximum phase" as shown in FIG. 5.

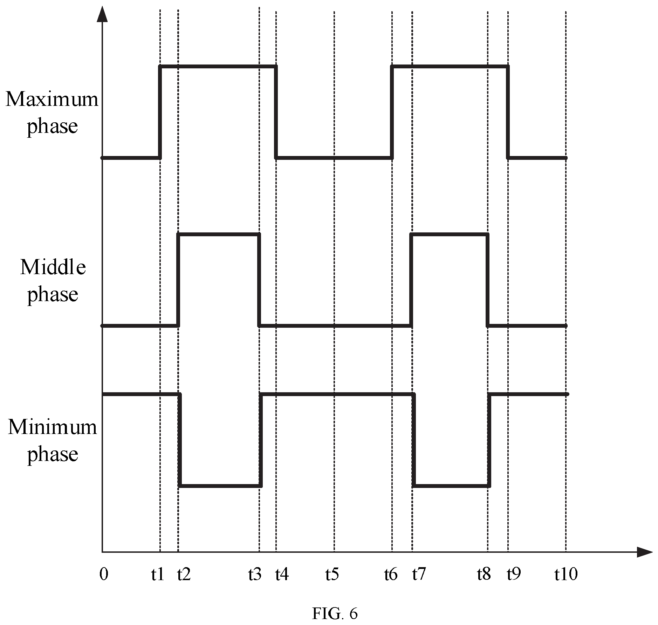

In the embodiments of the present disclosure, the first duty ratio corresponding to the maximum phase and the second duty ratio corresponding to the middle phase are calculated first, and then the minimum phase is complementary to the middle phase. Then, when the current-source-type converter is working, the maximum phase and the middle phase are turned on at the middle time of the switching cycle, and the minimum phase is turned on at the initial time and the final time of the switching cycle. Referring to FIG. 6, at the beginning (time 0) of the switching cycle (0-t5 or t5-t10 in FIG. 6), the minimum phase is in an on state, at time t1 the maximum phase is turned on, at time t2 the minimum phase is turned off and the middle phase is turned on, at time t3 the middle phase is turned off and the minimum phase is turned on, at time t4 the maximum phase is turned off, and from time t4 to time t5 the minimum phase is always in an on state until entering the next switching cycle, repeating the above process. The duration corresponding to the first duty ratio of the maximum phase is t1-t4, the duration corresponding to the second duty ratio of the middle phase is t2-t3, and the duration corresponding to the third duty ratio of the minimum phase is the sum of the durations 0-t2 and t3-t5 (also equal to twice the duration 0-t2, also equal to twice the duration t3-t5).

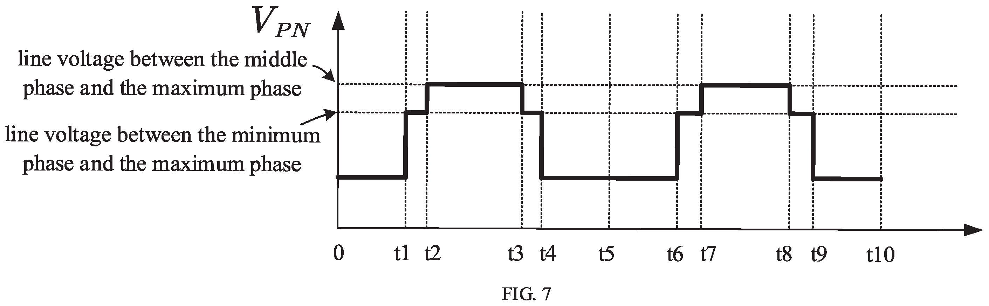

In the above control process, referring to FIG. 7, during the process 0-t1, since only the minimum phase is turned on, a loop cannot be formed in the bridge arm, therefore the bridge arm DC output voltage *V_{PN}* is 0; at time t1, the maximum phase is turned on, a loop is formed between the maximum phase and the minimum phase, therefore at this time the bridge arm DC output voltage *V_{PN}* jumps from 0 to "the line voltage between the minimum phase and the maximum phase"; at time t2, the minimum phase is turned off and the middle phase is turned on, a loop is formed between the maximum phase and the middle phase, therefore at this time the bridge arm DC output voltage *V_{PN}* jumps from "the line voltage between the minimum phase and the maximum phase" to "the line voltage between the middle phase and the maximum phase"; at time t3, the middle phase is turned off and the minimum phase is turned on, a loop is formed between the maximum phase and the minimum phase, therefore at this time the bridge arm DC output voltage *V_{PN}* jumps from "the line voltage between the middle phase and the maximum phase" to "the line voltage between the minimum phase and the maximum phase"; at time t4, the maximum phase is turned off, only the minimum phase is turned on, a loop cannot be formed in the bridge arm, therefore at this time the bridge arm DC output voltage *V_{PN}* jumps from "the line voltage between the minimum phase and the maximum phase" to zero.

It can be seen that by adopting the technical solutions provided by the embodiments of the present disclosure, the bridge arm DC output voltage *V_{PN}* only needs to jump between zero and "the line voltage between the minimum phase and the maximum phase", or between "the line voltage between the minimum phase and the maximum phase" and "the line voltage between the middle phase and the maximum phase". Both of these jump amplitudes are smaller than the jump amplitude between zero and "the line voltage between the middle phase and the maximum phase" in the related art. Therefore, adopting the technical solutions provided by the embodiments of the present disclosure may reduce the jump amplitude of the bridge arm DC output voltage *V_{PN}*, thereby reducing voltage stress, ensuring good current waveform quality of the three-phase alternating current, reducing the cost of the filter on the three-phase alternating current side, and improving EMI (Electromagnetic Compatibility) performance.

In some embodiments of the present disclosure, there are several methods for controlling the plurality of controllable switching devices in the current-source-type converter to be turned on or off.

### First control method

In any switching cycle, when the controllable switching device corresponding to the middle phase is in an off state, the controllable switching device on the upper bridge arm corresponding to the minimum phase or the controllable switching device on the lower bridge arm corresponding to the minimum phase is controlled to be in an on state; when the controllable switching device corresponding to the middle phase is in an on state, both the controllable switching device on the upper bridge arm corresponding to the minimum phase and the controllable switching device on the lower bridge arm corresponding to the minimum phase are controlled to be in an off state.

In implementation, in any switching cycle, referring to FIG. 6, firstly, a part of the controllable switching devices corresponding to the minimum phase may be controlled to be turned on. The part of the controllable switching devices corresponding to the minimum phase means: when the current voltage of the minimum phase is greater than zero, controlling the controllable switching device on the upper bridge arm corresponding to the minimum phase to be turned on, and controlling the controllable switching device on the lower bridge arm corresponding to the minimum phase to be turned off; when the current voltage of the minimum phase is less than zero, controlling the controllable switching device on the lower bridge arm corresponding to the minimum phase to be turned on, and controlling the controllable switching device on the upper bridge arm corresponding to the minimum phase to be turned off.

At time t1, the part of the controllable switching devices corresponding to the maximum phase is controlled to be turned on. The calculation method of the duration 0-t1 may be: first calculate a first difference between 1 and the first duty ratio, then multiply the first difference by the total duration of the switching cycle to obtain a first duration, half of the first duration is the duration 0-t1. The part of the controllable switching devices corresponding to the maximum phase means: when the current voltage of the maximum phase is greater than zero, controlling the controllable switching device on the upper bridge arm corresponding to the maximum phase to be turned on, and controlling the controllable switching device on the lower bridge arm corresponding to the maximum phase to be turned off; when the current voltage of the maximum phase is less than zero, controlling the controllable switching device on the lower bridge arm corresponding to the maximum phase to be turned on, and controlling the controllable switching device on the upper bridge arm corresponding to the maximum phase to be turned off.

At time t2, the part of the controllable switching devices corresponding to the minimum phase that is in an on state is controlled to be turned off, and the part of the controllable switching devices corresponding to the middle phase e is controlled to be turned on. The calculation method of the duration 0-t2 may be: first calculate a second difference between 1 and the second duty ratio, then multiply the second difference by the total duration of the switching cycle to obtain a second duration, half of the second duration is the duration 0-t2. The part of the controllable switching devices corresponding to the middle phase means: when the current voltage of the middle phase is greater than zero, controlling the controllable switching device on the upper bridge arm corresponding to the middle phase to be turned on, and controlling the controllable switching device on the lower bridge arm corresponding to the middle phase to be turned off; when the current voltage of the middle phase is less than zero, controlling the controllable switching device on the lower bridge arm corresponding to the middle phase to be turned on, and controlling the controllable switching device on the upper bridge arm corresponding to the middle phase to be turned off.

At time t3, the part of the controllable switching devices corresponding to the middle phase that is in an on state is controlled to be turned off, and the part of the controllable switching devices corresponding to the minimum phase is controlled to be turned on. The calculation method of the duration t2-t3 may be: calculate the product of the second duty ratio and the total duration of the switching cycle.

At time t4, the part of the controllable switching devices corresponding to the maximum phase that is in an on state is controlled to be turned off. The calculation method of the duration t1-t2 may be: calculate the product of the first duty ratio and the total duration of the switching cycle.

During the time period t4-t5, only the part of the controllable switching devices corresponding to the minimum phase is in an on state.

### Second control method

In any switching cycle, when both the controllable switching device corresponding to the maximum phase and the controllable switching device corresponding to the middle phase are in an off state, both the controllable switching device on the upper bridge arm corresponding to the minimum phase and the controllable switching device on the lower bridge arm corresponding to the minimum phase are controlled to be in an on state; when the controllable switching device corresponding to the maximum phase is in an on state and the controllable switching device corresponding to the middle phase is in an off state, control the controllable switching device on the upper bridge arm corresponding to the minimum phase or the controllable switching device on the lower bridge arm corresponding to the minimum phase is controlled to be in an on state.

In implementation, in any switching cycle, referring to FIG. 6, firstly, both the controllable switching device on the upper bridge arm corresponding to the minimum phase and the controllable switching device on the lower bridge arm corresponding to the minimum phase may be controlled to be turned on. At this time, since only the controllable switching devices corresponding to the minimum phase among the bridge arms corresponding to the three phases are turned on, the voltage at point P and the voltage at point N at both ends of the bridge arm DC output voltage *V_{PN}* are both clamped to the current voltage of the minimum phase, such that the voltage at point P and the voltage at point N will not jump beyond the current voltage of the minimum phase, realizing active clamping, thereby reducing voltage stress.

Moreover, when all the controllable switching devices corresponding to the minimum phase are in an on state, since the voltage drop across the series circuit of all the controllable switching devices of the minimum phase is greater than the voltage drop of *D_{dc}*, the current will flow through *D_{dc}*, and will not flow through the series circuit where all the controllable switching devices of the minimum phase are located. Therefore, controlling all the controllable switching devices of the minimum phase to be turned on will not affect the operation of the current-source-type converter, ensuring reliable operation even when the input voltage of the three-phase alternating current (i.e., the current voltages of the three phases) is relatively high, ensuring a wide input voltage operating range.

At time t1, the part of the controllable switching devices corresponding to the maximum phase is controlled to be turned on, and the part of the controllable switching devices corresponding to the minimum phase is controlled to be turned off. The calculation method of the duration 0-t1 may be: first calculate a first difference between 1 and the first duty ratio, then multiply the first difference by the total duration of the switching cycle to obtain a first duration, half of the first duration is the duration 0-t1. The part of the controllable switching devices corresponding to the maximum phase means: when the current voltage of the maximum phase is greater than zero, controlling the controllable switching device on the upper bridge arm corresponding to the maximum phase to be turned on, and controlling the controllable switching device on the lower bridge arm corresponding to the maximum phase to be turned off; when the current voltage of the maximum phase is less than zero, controlling the controllable switching device on the lower bridge arm corresponding to the maximum phase to be turned on, and controlling the controllable switching device on the upper bridge arm corresponding to the maximum phase to be turned off. The part of the controllable switching devices corresponding to the minimum phase to be turned off means: when the current voltage of the minimum phase is greater than zero, controlling the controllable switching device on the lower bridge arm corresponding to the minimum phase to be turned off, and the controllable switching device on the upper bridge arm corresponding to the minimum phase remains in an on state; when the current voltage of the minimum phase is less than zero, controlling the controllable switching device on the upper bridge arm corresponding to the minimum phase to be turned off, and the controllable switching device on the lower bridge arm corresponding to the minimum phase remains in an on state.

At time t2, the part of the controllable switching devices corresponding to the minimum phase that is in an on state is controlled to be turned off, and the part of the controllable switching devices corresponding to the middle phase is controlled to be turned on. The calculation method of the duration 0-t2 may be: first calculate a second difference between 1 and the second duty ratio, then multiply the second difference by the total duration of the switching cycle to obtain a second duration, half of the second duration is the duration 0-t2. The part of the controllable switching devices corresponding to the middle phase means: when the current voltage of the middle phase is greater than zero, controlling the controllable switching device on the upper bridge arm corresponding to the middle phase to be turned on, and controlling the controllable switching device on the lower bridge arm corresponding to the middle phase to be turned off; when the current voltage of the middle phase is less than zero, controlling the controllable switching device on the lower bridge arm corresponding to the middle phase to be turned on, and controlling the controllable switching device on the upper bridge arm corresponding to the middle phase to be turned off.

At time t3, the part of the controllable switching devices corresponding to the middle phase that is in an on state is controlled to be turned off, and the part of the controllable switching devices corresponding to the minimum phase is controlled to be turned on. The calculation method of the duration t2-t3 may be: calculate the product of the second duty ratio and the total duration of the switching cycle.

At time t4, the part of the controllable switching devices corresponding to the maximum phase that is in an on state is controlled to be turned off, and the part of the controllable switching devices corresponding to the minimum phase that is in an off state is controlled to be turned on. The calculation method of the duration t1-t2 may be: calculate the product of the first duty ratio and the total duration of the switching cycle.

During the time period t4-t5, both the controllable switching device on the upper bridge arm corresponding to the minimum phase and the controllable switching device on the lower bridge arm corresponding to the minimum phase are in an on state, such that the voltage at point P and the voltage at point N does not jump beyond the current voltage of the minimum phase, realizing active clamping, thereby reducing voltage stress.

### Third control method

In any switching cycle, both the controllable switching device on the upper bridge arm corresponding to the maximum phase and the controllable switching device on the lower bridge arm corresponding to the maximum phase are controlled to be turned on or turned off based on the first duty ratio; both the controllable switching device on the upper bridge arm corresponding to the middle phase and the controllable switching device on the lower bridge arm corresponding to the middle phase are controlled to be turned on or turned off based on the second duty ratio; both the controllable switching device on the upper bridge arm corresponding to the minimum phase and the controllable switching device on the lower bridge arm corresponding to the minimum phase are controlled to be turned on or turned off based on the third duty ratio.

In implementation, referring to FIG. 6, taking the switching cycle 0-t5 as an example, based on the first duty ratio and the total duration of the switching cycle, the conduction period of the maximum phase in the switching cycle (i.e., t1-t4 in FIG. 6) may be determined. Then at time t1, both the controllable switching device on the upper bridge arm corresponding to the maximum phase and the controllable switching device on the lower bridge arm corresponding to the maximum phase may be controlled to be turned on, and at time t4, both the controllable switching device on the upper bridge arm corresponding to the maximum phase and the controllable switching device on the lower bridge arm corresponding to the maximum phase may be controlled to be turned off.

Based on the second duty ratio and the total duration of the switching cycle, the conduction period of the middle phase in the switching cycle (i.e., t2-t3 in FIG. 6) may be determined. Then at time t2, both the controllable switching device on the upper bridge arm corresponding to the middle phase and the controllable switching device on the lower bridge arm corresponding to the middle phase may be controlled to be turned on, and at time t3, both the controllable switching device on the upper bridge arm corresponding to the middle phase and the controllable switching device on the lower bridge arm corresponding to the middle phase may be controlled to be turned off.

Based on the third duty ratio and the total duration of the switching cycle, the conduction period of the minimum phase in the switching cycle (i.e., 0-t2 and t3-t5 in FIG. 6) may be determined. Then at time t3, both the controllable switching device on the upper bridge arm corresponding to the minimum phase and the controllable switching device on the lower bridge arm corresponding to the minimum phase may be controlled to be turned on, and at time t7 of the next switching cycle, both the controllable switching device on the upper bridge arm corresponding to the minimum phase and the controllable switching device on the lower bridge arm corresponding to the minimum phase may be controlled to be turned off.

Such an arrangement may achieve the beneficial effects of the second control method, i.e., "when both the controllable switching device corresponding to the maximum phase and the controllable switching device corresponding to the middle phase are in an off state, both the controllable switching device on the upper bridge arm corresponding to the minimum phase and the controllable switching device on the lower bridge arm corresponding to the minimum phase are controlled to be in an on state; when the controllable switching device corresponding to the maximum phase is in an on state and the controllable switching device corresponding to the middle phase is in an off state, control the controllable switching device on the upper bridge arm corresponding to the minimum phase or the controllable switching device on the lower bridge arm corresponding to the minimum phase is controlled to be in an on state", i.e., reducing voltage stress, ensuring a wide input voltage operating range. In addition, the third control method may achieve reducing the complexity of the control method.

The above several control methods are only examples, and the control method in the embodiments of the present disclosure may be other reasonable methods, which is not specifically limited in the embodiments of the present disclosure.

In some embodiments of the present disclosure, the method for determining the first duty ratio corresponding to the maximum phase may be as follows.

The first duty ratio corresponding to the maximum phase may be determined based on the sum of squares of the current voltages of the three phases, the current voltage of the maximum phase, and the DC voltage.

In some embodiments, the first duty ratio corresponding to the maximum phase may be determined based on the following formula (1): ${d}_{Max} = \frac{{V}_{dc}}{{{v}_{a}}^{2} + {{v}_{b}}^{2} + {{v}_{c}}^{2}} \cdot Max \left(\left|{v}_{a}\right|, \left|{v}_{b}\right|, \left|{v}_{c}\right|\right)$ (1) where *d_{Max}* is the first duty ratio, *V_{dc}* is the DC voltage, and *vₐ, v_{b}, v_{c}* are respectively the current voltages of the three-phase alternating current.

In some embodiments of the present disclosure, the method for determining the second duty ratio corresponding to the middle phase may be as follows.

The second duty ratio corresponding to the middle phase may be determined based on the sum of squares of the current voltages of the three phases, the current voltage of the middle phase and the DC voltage.

In some embodiments, the second duty ratio corresponding to the middle phase may be determined based on the following formula (2): ${d}_{Mid} = \frac{{V}_{dc}}{{{v}_{a}}^{2} + {{v}_{b}}^{2} + {{v}_{c}}^{2}} \cdot Mid \left(\left|{v}_{a}\right|, \left|{v}_{b}\right|, \left|{v}_{c}\right|\right)$ (2) where *d_{Mid}* is the second duty ratio, *V_{dc}* is the DC voltage, and *vₐ*, *v_{b}, v_{c}* are respectively the current voltages of the three-phase alternating current.

Below, referring to Table 1, the calculation methods of the duty ratios corresponding to the three phases in each sector are summarized.

**Table 1**

| | Duty ratio corresponding to *vₐ* | Duty ratio corresponding to *v_{b}* | Duty ratio corresponding to *v_{c}* |
|---|---|---|---|
| Sector 1 | *dₐ =* 1 - *d_{c}* | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |
| Sector 2 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | *d_{c} =* 1 *- dₐ* |
| Sector 3 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | *d_{c}* = 1 *- d_{b}* |
| Sector 4 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | *d_{b}* = 1 *- d_{c}* | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |
| Sector 5 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | *d_{b}* = 1 *- dₐ* | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |
| Sector 6 | *dₐ =* 1 *- d_{b}* | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |
| Sector 7 | *dₐ =* 1 *- d_{c}* | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |
| Sector 8 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | *d_{c} = 1 - dₐ* |
| Sector 9 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | *d_{c}* = 1 - *d_{b}* |
| Sector 10 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | *d_{b}* = 1 -*d_{c}* | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |
| Sector 11 | $\begin{matrix}{d}_{a} = \frac{{V}_{dc}}{{{v}_{a}}^{2} + {{v}_{b}}^{2} + {{v}_{c}}^{2}} \\ \cdot \left\|{v}_{a}\right\|\end{matrix}$ | *d_{b} =* 1 *- dₐ* | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |
| Sector 12 | *dₐ =* 1 *- d_{b}* | $\begin{matrix}{d}_{b} = \frac{{V}_{dc}}{{{v}_{a}}^{2} + {{v}_{b}}^{2} + {{v}_{c}}^{2}} \\ \cdot \left\|{v}_{b}\right\|\end{matrix}$ | $\begin{matrix}{d}_{c} = \frac{{V}_{dc}}{{{v}_{a}}^{2} + {{v}_{b}}^{2} + {{v}_{c}}^{2}} \\ \cdot \left\|{v}_{c}\right\|\end{matrix}$ |

In the embodiments of the present disclosure, the calculation method of the duty ratios corresponding to the three phases may be other reasonable methods, which is not specifically limited in the embodiments of the present disclosure.

All the above technical solutions may be arbitrarily combined to form optional embodiments of the present disclosure, which will not be described one by one here.

In the solutions mentioned in the embodiments of the present disclosure, the first duty ratio corresponding to the maximum phase is determined based on the current voltage of the maximum phase, the second duty ratio corresponding to the middle phase is determined based on the current voltage of the middle phase, and the minimum phase is complementary to the middle phase. Thus, in each switching cycle, the bridge arm DC output voltage *V_{PN}* may jump from zero to the line voltage between the minimum phase and the maximum phase, then from the line voltage between the minimum phase and the maximum phase to the line voltage between the middle phase and the maximum phase, then from the line voltage between the middle phase and the maximum phase to the line voltage between the minimum phase and the maximum phase, and then from the line voltage between the minimum phase and the maximum phase to zero.

Since in any sector among the 12 sectors, the line voltage between the minimum phase and the maximum phase is less than the line voltage between the middle phase and the maximum phase, the jump amplitude of the bridge arm DC output voltage *V_{PN}* may be reduced, thereby reducing voltage stress, ensuring good current waveform quality of the three-phase alternating current, reducing the cost of the filter on the three-phase alternating current side, and improving EMI performance.

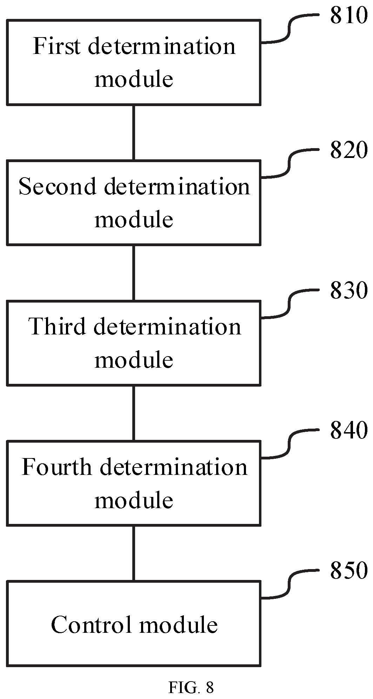

Some embodiments of the present disclosure provide a control apparatus for a current-source-type converter. The apparatus may be the computer device in the above embodiments. As shown in FIG. 8, the apparatus includes:
a first determination module 810, configured to determine a maximum phase, a minimum phase, and a middle phase based on current voltages of three phases in the three-phase alternating current;
a second determination module 820, configured to determine a first duty ratio corresponding to the maximum phase based on the current voltage of the maximum phase;
a third determination module 830, configured to determine a second duty ratio corresponding to the middle phase based on the current voltage of the middle phase;
a fourth determination module 840, configured to determine a third duty ratio corresponding to the minimum phase based on the second duty ratio corresponding to the middle phase; where the minimum phase is complementary to the middle phase; and
a control module 850, configured to control a plurality of controllable switching devices in the current-source-type converter to be turned on or off based on the current voltages of the three phases, the first duty ratio, the second duty ratio, and the third duty ratio.

In some embodiments, the control module 850 is configured to:
in any switching cycle, when the controllable switching device corresponding to the middle phase is in an off state, control the controllable switching device on the upper bridge arm corresponding to the minimum phase or the controllable switching device on the lower bridge arm corresponding to the minimum phase to be in an on state; when the controllable switching device corresponding to the middle phase is in an on state, control both the controllable switching device on the upper bridge arm corresponding to the minimum phase and the controllable switching device on the lower bridge arm corresponding to the minimum phase to be in an off state.

In some embodiments, the control module 850 is further configured to:
in any switching cycle, when both the controllable switching device corresponding to the maximum phase and the controllable switching device corresponding to the middle phase are in an off state, control both the controllable switching device on the upper bridge arm corresponding to the minimum phase and the controllable switching device on the lower bridge arm corresponding to the minimum phase to be in an on state; when the controllable switching device corresponding to the maximum phase is in an on state and the controllable switching device corresponding to the middle phase is in an off state, control the controllable switching device on the upper bridge arm corresponding to the minimum phase or the controllable switching device on the lower bridge arm corresponding to the minimum phase to be in an on state.

In some embodiments, the control module 850 is configured to:
control both the controllable switching device on the upper bridge arm corresponding to the maximum phase and the controllable switching device on the lower bridge arm corresponding to the maximum phase to be turned on or turned off based on the first duty ratio;
control both the controllable switching device on the upper bridge arm corresponding to the middle phase and the controllable switching device on the lower bridge arm corresponding to the middle phase to be turned on or turned off based on the second duty ratio; and
control both the controllable switching device on the upper bridge arm corresponding to the minimum phase and the controllable switching device on the lower bridge arm corresponding to the minimum phase to be turned on or turned off based on the third duty ratio.

In some embodiments, the second determination module 820 is configured to:
determine the first duty ratio corresponding to the maximum phase based on the sum of squares of the current voltages of the three phases, the current voltage of the maximum phase, and the DC voltage.

In some embodiments, the third determination module 830 is configured to:
determine the second duty ratio corresponding to the middle phase based on the sum of squares of the current voltages of the three phases, the current voltage of the middle phase and the DC voltage.

In some embodiments, the controllable switching device is any one of an IGBT, a MOSFET, and a combination of an IGBT and a diode connected in anti-parallel.

It should be noted that, when the control apparatus for a current-source-type converter provided by the above embodiments controls the current-source-type converter, the division of the above functional modules is only taken as an example for illustration. In practical applications, the above functions may be allocated to different functional modules according to needs, i.e., the internal structure of the apparatus is divided into different functional modules to complete all or part of the functions described above. In addition, the control apparatus for a current-source-type converter provided by the above embodiments and the control method for a current-source-type converter embodiments belong to the same concept, and the specific implementation process thereof is detailed in the method embodiments and will not be repeated here.

Some embodiments of the present disclosure provide a control circuit for a current-source-type converter, the control circuit including a current-source-type converter and a controller; the controller is configured to:
determine a maximum phase, a minimum phase and a middle phase based on the current voltages of the three phases in the three-phase alternating current;
determine a first duty ratio corresponding to the maximum phase based on the current voltage of the maximum phase;
determine a second duty ratio corresponding to the middle phase based on the current voltage of the middle phase;
determine a third duty ratio corresponding to the minimum phase based on the second duty ratio corresponding to the middle phase, wherein the minimum phase is complementary to the middle phase; and
control a plurality of controllable switching devices in the current-source-type converter to be turned on or off based on the current voltages of the three phases, the first duty ratio, the second duty ratio and the third duty ratio.

In some embodiments, the controller is configured to:
in any switching cycle, when the controllable switching device corresponding to the middle phase is in an off state, control the controllable switching device on the upper bridge arm corresponding to the minimum phase or the controllable switching device on the lower bridge arm corresponding to the minimum phase to be in an on state; when the controllable switching device corresponding to the middle phase is in an on state, control both the controllable switching device on the upper bridge arm corresponding to the minimum phase and the controllable switching device on the lower bridge arm corresponding to the minimum phase to be in an off state.

In some embodiments, the controller is configured to:
in any switching cycle, when both the controllable switching device corresponding to the maximum phase and the controllable switching device corresponding to the middle phase are in an off state, control both the controllable switching device on the upper bridge arm corresponding to the minimum phase and the controllable switching device on the lower bridge arm corresponding to the minimum phase to be in an on state; when the controllable switching device corresponding to the maximum phase is in an on state and the controllable switching device corresponding to the middle phase is in an off state, control the controllable switching device on the upper bridge arm corresponding to the minimum phase or the controllable switching device on the lower bridge arm corresponding to the minimum phase to be in an on state.

In some embodiments, the controller is configured to:
control both the controllable switching device on the upper bridge arm corresponding to the maximum phase and the controllable switching device on the lower bridge arm corresponding to the maximum phase to be turned on or turned off based on the first duty ratio;
control both the controllable switching device on the upper bridge arm corresponding to the middle phase and the controllable switching device on the lower bridge arm corresponding to the middle phase to be turned on or turned off based on the second duty ratio; and
control both the controllable switching device on the upper bridge arm corresponding to the minimum phase and the controllable switching device on the lower bridge arm corresponding to the minimum phase to be turned on or turned off based on the third duty ratio.

In some embodiments, the controller is configured to:
determine the first duty ratio corresponding to the maximum phase based on the sum of squares of the current voltages of the three phases, the current voltage of the maximum phase and the DC voltage.

In some embodiments, the controller is configured to:
determine the second duty ratio corresponding to the middle phase based on the sum of squares of the current voltages of the three phases, the current voltage of the middle phase and the DC voltage.

In some embodiments, the controllable switching device is any one of an IGBT, a MOSFET, and a combination of an IGBT and a diode connected in anti-parallel.

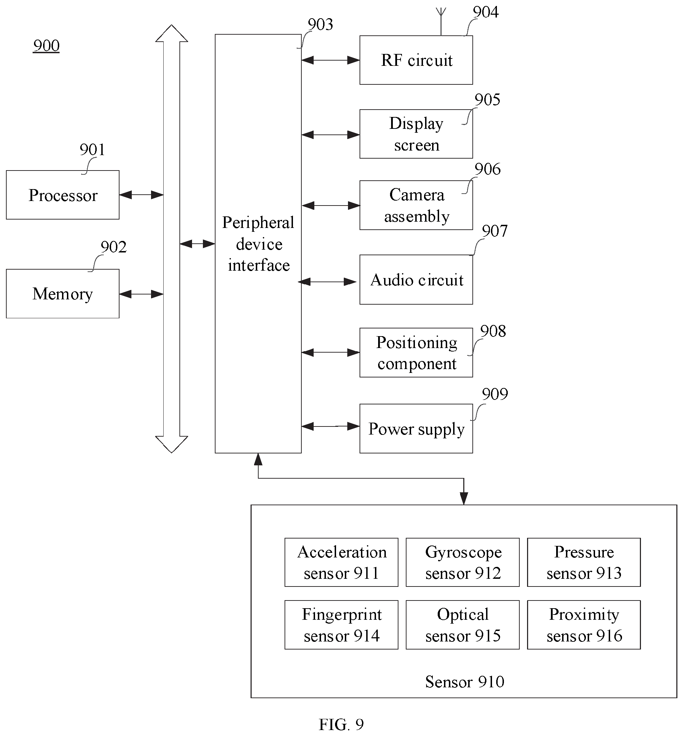

FIG. 9 shows a structural block diagram of a terminal 900 provided by some embodiments of the present disclosure. The terminal may be the computer device in the above embodiments. The terminal 900 may be: a smartphone, a tablet computer, an MP3 (Moving Picture Experts Group Audio Layer III) player, an MP4 (Moving Picture Experts Group Audio Layer IV) player, a laptop computer, or a desktop computer. The terminal 900 may be called a user equipment, a portable terminal, a laptop terminal, a desktop terminal, or other names.

Generally, the terminal 900 includes: a processor 901 and a memory 902.

The processor 901 may include one or more processing cores, such as a 4-core processor, an 8-core processor, etc. The processor 901 may be implemented using at least one hardware form of DSP (Digital Signal Processing), FPGA (Field-Programmable Gate Array), PLA (Programmable Logic Array). The processor 901 may also include a main processor and a coprocessor. The main processor is a processor for processing data in an awake state, also called a CPU (Central Processing Unit); the coprocessor is a low-power processor for processing data in a standby state. In some embodiments, the processor 901 may integrate a GPU (Graphics Processing Unit), which is responsible for rendering and drawing content to be displayed on a display screen. In some embodiments, the processor 901 may further include an AI (Artificial Intelligence) processor, which is used to process computing operations related to machine learning.

The memory 902 may include one or more computer-readable storage media, which may be non-transitory. The memory 902 may include a high-speed random access memory, and a nonvolatile memory, such as one or more magnetic disk storage devices, flash memory storage devices. In some embodiments, the non-transitory computer-readable storage medium in the memory 902 is configured to store at least one instruction, and the at least one instruction is configured to be executed by the processor 901 to implement the control method for a current-source-type converter provided in the method embodiments of the present disclosure.

In some embodiments, the terminal 900 may further include: a peripheral device interface 903 and at least one peripheral device. The processor 901, the memory 902, and the peripheral device interface 903 may be connected via a bus or signal lines. Each peripheral device may be connected to the peripheral device interface 903 via a bus, a signal line, or a circuit board. Specifically, the peripheral device includes: at least one of a radio frequency circuit 904, a display screen 905, a camera assembly 906, an audio circuit 907, a positioning component 908, or a power supply 909.

The peripheral device interface 903 may be configured to connect at least one peripheral device related to I/O (Input/Output) to the processor 901 and the memory 902. In some embodiments, the processor 901, the memory 902 and the peripheral device interface 903 are integrated on the same chip or circuit board. In other embodiments, any one or two of the processor 901, the memory 902, and the peripheral device interface 903 may be implemented on a separate chip or circuit board, which is not limited in the embodiments of the present disclosure.

The radio frequency circuit 904 is configured to receive and transmit RF (Radio Frequency) signals, also called electromagnetic signals. The radio frequency circuit 904 communicates with a communication network and other communication devices via electromagnetic signals. The radio frequency circuit 904 converts electrical signals into electromagnetic signals for transmission, or converts received electromagnetic signals into electrical signals. The radio frequency circuit 904 may include: an antenna system, an RF transceiver, one or more amplifiers, a tuner, an oscillator, a digital signal processor, a codec chipset, a subscriber identity module card, etc. The radio frequency circuit 904 may communicate with other terminals via at least one wireless communication protocol. The wireless communication protocol includes but is not limited to: metropolitan area network, various generations of mobile communication networks (2G, 3G, 4G and 5G), wireless local area network and/or Wi-Fi (Wireless Fidelity) network. In some embodiments, the radio frequency circuit 904 may also include circuits related to NFC (Near Field Communication), which is not limited in the present disclosure.

The display screen 905 is configured to display a UI (User Interface). The UI may include graphics, text, icons, videos, and any combination thereof. When the display screen 905 is a touch display screen, the display screen 905 also has the ability to collect touch signals on or above the surface of the display screen 905. The touch signal may be input to the processor 901 as a control signal for processing. The display screen 905 may further be configured to provide virtual buttons and/or virtual keyboards, also called soft buttons and/or soft keyboards. In some embodiments, the display screen 905 may be one, disposed on the front panel of the terminal 900; in other embodiments, the display screen 905 may be at least two, respectively disposed on different surfaces of the terminal 900 or in a foldable design; in still other embodiments, the display screen 905 may be a flexible display screen, disposed on a curved surface or a folded surface of the terminal 900. The display screen 905 may be configured as a non-rectangular irregular shape, i.e., a special-shaped screen. The display screen 905 may be made of materials such as LCD (Liquid Crystal Display), OLED (Organic Light-Emitting Diode), etc.

The camera assembly 906 is configured to capture images or videos. The camera assembly 906 may include a front camera and a rear camera. Generally, the front camera is disposed on the front panel of the terminal, and the rear camera is disposed on the back of the terminal. In some embodiments, the rear camera is at least two, respectively any one of a main camera, a depth-of-field camera, a wide-angle camera, and a telephoto camera, to achieve background blurring function by fusion of the main camera and the depth-of-field camera, panoramic shooting by fusion of the main camera and the wide-angle camera, VR (Virtual Reality) shooting function or other fusion shooting functions. In some embodiments, the camera assembly 906 may further include a flash. The flash may be a single-color-temperature flash or a dual-color-temperature flash. The dual-color-temperature flash refers to a combination of a warm-light flash and a cold-light flash, which may be configured for light compensation under different color temperatures.

The audio circuit 907 may include a microphone and a speaker. The microphone is configured to collect sound waves of the user and the environment, and convert the sound waves into electrical signals to be input to the processor 901 for processing, or input to the radio frequency circuit 904 to realize voice communication. For the purpose of stereo acquisition or noise reduction, the microphone may be multiple, respectively disposed at different parts of the terminal 900. The microphone may be an array microphone or an omnidirectional acquisition microphone. The speaker is configured to convert electrical signals from the processor 901 or the radio frequency circuit 904 into sound waves. The speaker may be a traditional thin-film speaker or a piezoelectric ceramic speaker. When the speaker is a piezoelectric ceramic speaker, it can not only convert electrical signals into audible sound waves for humans, but also convert electrical signals into inaudible sound waves for distance measurement and other purposes. In some embodiments, the audio circuit 907 may further include a headphone jack.

The positioning component 908 is configured to locate the current geographic location of the terminal 900 to implement navigation or LBS (Location Based Service). The positioning component 908 may be a positioning component based on GPS (Global Positioning System), BeiDou system, GLONASS system or Galileo system.

The power supply 909 is configured to supply power to each component in the terminal 900. The power supply 909 may be alternating current, direct current, a disposable battery or a rechargeable battery. When the power supply 909 includes a rechargeable battery, the rechargeable battery may support wired charging or wireless charging. The rechargeable battery may be configured to support fast charging technology.

In some embodiments, the terminal 900 further includes one or more sensors 910. The one or more sensors 910 include but are not limited to: an acceleration sensor 911, a gyroscope sensor 912, a pressure sensor 913, a fingerprint sensor 914, an optical sensor 915, and a proximity sensor 916.

The acceleration sensor 911 may detect the magnitude of acceleration on three coordinate axes of a coordinate system established by the terminal 900. For example, the acceleration sensor 911 may be configured to detect the components of gravitational acceleration on the three coordinate axes. The processor 901 may control the display screen 905 to display a user interface in a landscape view or a portrait view according to the gravitational acceleration signal collected by the acceleration sensor 911. The acceleration sensor 911 may be configured for game or user motion data collection.

The gyroscope sensor 912 may detect the body direction and rotation angle of the terminal 900. The gyroscope sensor 912 may cooperate with the acceleration sensor 911 to collect 3D actions of the user on the terminal 900. According to the data collected by the gyroscope sensor 912, the processor 901 may implement the following functions: motion sensing (e.g., changing UI according to the user's tilt operation), image stabilization during shooting, game control and inertial navigation.

The pressure sensor 913 may be disposed on the side frame of the terminal 900 and/or the lower layer of the display screen 905. When the pressure sensor 913 is disposed on the side frame of the terminal 900, it can detect a grip signal of the user on the terminal 900, and the processor 901 performs left-hand/right-hand recognition or shortcut operation according to the grip signal collected by the pressure sensor 913. When the pressure sensor 913 is disposed on the lower layer of the display screen 905, the processor 901 may control operability controls on the UI interface according to the user's pressure operation on the display screen 905. The operability controls include at least one of a button control, a scroll bar control, an icon control, or a menu control.

The fingerprint sensor 914 is configured to collect a user's fingerprint, and the processor 901 may identify the user's identity according to the fingerprint collected by the fingerprint sensor 914, or the fingerprint sensor 914 may identify the user's identity according to the collected fingerprint. When the user's identity is identified as a trusted identity, the processor 901 may authorize the user to perform relevant sensitive operations, including unlocking the screen, viewing encrypted information, downloading software, making payments, and changing settings. The fingerprint sensor 914 may be disposed on the front, back, or side of the terminal 900. When the terminal 900 is arranged with physical keys or a manufacturer Logo, the fingerprint sensor 914 may be integrated with the physical keys or the manufacturer Logo.

The optical sensor 915 is configured to collect ambient light intensity. In some embodiments, the processor 901 may control the display brightness of the display screen 905 according to the ambient light intensity collected by the optical sensor 915. Specifically, when the ambient light intensity is high, the display brightness of the display screen 905 is increased; when the ambient light intensity is low, the display brightness of the display screen 905 is decreased. In other embodiments, the processor 901 may dynamically adjust the shooting parameters of the camera assembly 906 according to the ambient light intensity collected by the optical sensor 915.

The proximity sensor 916, also called a distance sensor, is usually disposed on the front panel of the terminal 900. The proximity sensor 916 is configured to collect the distance between the user and the front side of the terminal 900. In some embodiments, when the proximity sensor 916 detects that the distance between the user and the front side of the terminal 900 gradually decreases, the processor 901 controls the display screen 905 to switch from a bright screen state to a screen-off state; when the proximity sensor 916 detects that the distance between the user and the front side of the terminal 900 gradually increases, the processor 901 controls the display screen 905 to switch from a screen-off state to a bright screen state.

Those skilled in the art can understand that the structure shown in FIG. 9 does not constitute a limitation on the terminal 900, and may include more or fewer components than shown, or combine some components, or adopt a different component arrangement.

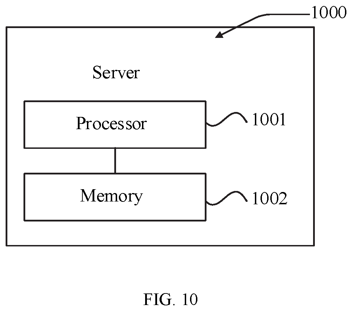

FIG. 10 is a structural schematic diagram of a server according to some embodiments of the present disclosure. The server 1000 may have relatively large differences due to different configurations or performances, and may include one or more processors (Central Processing Units, CPUs) 1001 and one or more memories 1002. The memory 1002 stores at least one instruction, and the at least one instruction is loaded and can be executed by the processor 1001 to implement the methods provided by the above method embodiments. Of course, the server may further have components such as a wired or wireless network interface, a keyboard, and an input/output interface for input and output, and other components for implementing device functions, which will not be described in detail here.

In some embodiments, a computer-readable storage medium is provided, for example, a memory including instructions. The instructions may be executed by a processor in a terminal to complete the control method for a current-source-type converter in the above embodiments. The computer-readable storage medium may be non-transitory. For example, the computer-readable storage medium may be ROM (Read-Only Memory), RAM (Random Access Memory), CD-ROM, magnetic tape, floppy disk, optical data storage device, etc.

Those skilled in the art can understand that all or part of the operations in the above method embodiments may be implemented by hardware, or by a program instructing relevant hardware. The program may be stored in a computer-readable storage medium. The above-mentioned storage medium may be a read-only memory, a magnetic disk or an optical disk, etc.

It should be noted that the information (including but not limited to user device information, user personal information, etc.), data (including but not limited to data for analysis, stored data, displayed data, etc.) and signals (including but not limited to signals transmitted between the user terminal and other devices) involved in the present disclosure are all authorized by the user or fully authorized by all parties, and the collection, use and processing of relevant data need to comply with relevant laws, regulations and standards of relevant countries and regions. For example, the "current voltages of the three phases" involved in the present disclosure are all obtained under sufficient authorization.

The above descriptions are only some embodiments of the present disclosure, and are not intended to limit the present disclosure. Any modifications, equivalent substitutions, improvements, etc. made within the spirit and principle of the present disclosure shall be included in the scope of the present disclosure.

## Claims

1. A control method for a current-source-type converter, comprising:
determining a maximum phase, a minimum phase, and a middle phase based on current voltages of the three phases in the three-phase alternating current;
determining a first duty ratio corresponding to the maximum phase based on the current voltage of the maximum phase;
determining a second duty ratio corresponding to the middle phase based on the current voltage of the middle phase;
determining a third duty ratio corresponding to the minimum phase based on the second duty ratio corresponding to the middle phase, wherein the minimum phase is complementary to the middle phase; and
controlling a plurality of controllable switching devices in the current-source-type converter to be turned on or off based on the first duty ratio, the second duty ratio, and the third duty ratio.

2. The method according to claim 1, wherein the controlling the plurality of controllable switching devices in the current-source-type converter to be turned on or off based on the first duty ratio, the second duty ratio, and the third duty ratio comprises:
in any switching cycle, in a case where the controllable switching device corresponding to the middle phase is in an off state, controlling the controllable switching device on an upper bridge arm corresponding to the minimum phase or the controllable switching device on a lower bridge arm corresponding to the minimum phase to be in an on state; and
in a case where the controllable switching device corresponding to the middle phase is in an on state, controlling both the controllable switching device on the upper bridge arm corresponding to the minimum phase and the controllable switching device on the lower bridge arm corresponding to the minimum phase to be in an off state.

3. The method according to claim 1, wherein the controlling the plurality of controllable switching devices in the current-source-type converter to be turned on or off based on the first duty ratio, the second duty ratio, and the third duty ratio comprises:
in any switching cycle, in a case where both the controllable switching device corresponding to the maximum phase and the controllable switching device corresponding to the middle phase are in an off state, controlling both the controllable switching device on an upper bridge arm corresponding to the minimum phase and the controllable switching device on a lower bridge arm corresponding to the minimum phase to be in an on state; and
in a case where the controllable switching device corresponding to the maximum phase is in an on state and the controllable switching device corresponding to the middle phase is in an off state, controlling the controllable switching device on the upper bridge arm corresponding to the minimum phase or the controllable switching device on the lower bridge arm corresponding to the minimum phase to be in an on state.

4. The method according to claim 1, wherein the controlling the plurality of controllable switching devices in the current-source-type converter to be turned on or off based on the first duty ratio, the second duty ratio, and the third duty ratio comprises:
in any switching cycle, controlling both the controllable switching device on an upper bridge arm corresponding to the maximum phase and the controllable switching device on a lower bridge arm corresponding to the maximum phase to be turned on or turned off based on the first duty ratio;
controlling both the controllable switching device on an upper bridge arm corresponding to the middle phase and the controllable switching device on a lower bridge arm corresponding to the middle phase to be turned on or turned off based on the second duty ratio; and
controlling both the controllable switching device on an upper bridge arm corresponding to the minimum phase and the controllable switching device on a lower bridge arm corresponding to the minimum phase to be turned on or turned off based on the third duty ratio.

5. The method according to claim 1, wherein the determining the first duty ratio corresponding to the maximum phase based on the current voltage of the maximum phase comprises:
determining the first duty ratio corresponding to the maximum phase based on a sum of squares of the current voltages of the three phases, the current voltage of the maximum phase, and a direct current, DC, voltage.

6. The method according to claim 1, wherein the determining the second duty ratio corresponding to the middle phase based on the current voltage of the middle phase comprises:
determining the second duty ratio corresponding to the middle phase based on a sum of squares of the current voltages of the three phases, the current voltage of the middle phase, and a DC voltage.

7. A control apparatus for a current-source-type converter, comprising:
a first determination module, configured to determine a maximum phase, a minimum phase, and a middle phase based on current voltages of the three phases in the three-phase alternating current;
a second determination module, configured to determine a first duty ratio corresponding to the maximum phase based on the current voltage of the maximum phase;
a third determination module, configured to determine a second duty ratio corresponding to the middle phase based on the current voltage of the middle phase;
a fourth determination module, configured to determine a third duty ratio corresponding to the minimum phase based on the second duty ratio corresponding to the middle phase, wherein the minimum phase is complementary to the middle phase; and
a control module, configured to control a plurality of controllable switching devices in the current-source-type converter to be turned on or off based on the current voltages of the three phases, the first duty ratio, the second duty ratio, and the third duty ratio.

8. A control circuit for a current-source-type converter, comprising a current-source-type converter and a controller, wherein:
the controller is configured to:
determine a maximum phase, a minimum phase, and a middle phase based on current voltages of the three phases in the three-phase alternating current;
determine a first duty ratio corresponding to the maximum phase based on the current voltage of the maximum phase;
determine a second duty ratio corresponding to the middle phase based on the current voltage of the middle phase;
determine a third duty ratio corresponding to the minimum phase based on the second duty ratio corresponding to the middle phase, wherein the minimum phase is complementary to the middle phase; and
control a plurality of controllable switching devices in the current-source-type converter to be turned on or off based on the current voltages of the three phases, the first duty ratio, the second duty ratio, and the third duty ratio.

9. A computer device, comprising a processor and a memory having stored thereon at least one instruction, wherein the at least one instruction, when loaded and executed by the processor, performs the operations performed by the control method for a current-source-type converter according to any one of claims 1 to 6.

10. A computer-readable storage medium, having stored thereon at least one instruction, wherein the at least one instruction, when loaded and executed by a processor, performs the operations performed by the control method for a current-source-type converter according to any one of claims 1 to 6.
